# EUROPÄISCHE PATENTANMELDUNG

(11) **EP 1 028 087 A1**
(43) Veröffentlichungstag der Anmeldung: **16.08.2000**
(21) Anmeldenummer: 00101642.7
(22) Anmeldetag: 31.01.2000
(51) Int. Cl.: C01B 7/19, B01J 19/02

(54) **Verfahren zum Herstellen reiner Flusssäure**

(30) Priorität: 12.02.1999 DE 19905798
(71) Anmelder: BAYER AG, 51368 Leverkusen (DE)
(72) Erfinder: Lailach, G-nther, Dr., 47799 Krefeld (DE)

(57) **Zusammenfassung**

Das neue Verfahren zur Herstellung von reiner Flusssäure bzw. reinem Fluorwasserstoff ist dadurch gekennzeichnet, dass nach destillativer/oxidativer Vorbehandlung eine zweistufige Wäsche mit 65 bis 90 gew.-%iger Flusssäure bzw. 90 bis 100 gew.-%iger Flusssäure durchgeführt wird, wobei durch Einspeisen von Wasser in den ersten oder zweiten Waschkreislauf und Ausspeisen einer entsprechenden Menge Flusssäure Verunreinigungen entfernt werden.

## Beschreibung

Die Erfindung betrifft ein Verfahren zum Herstellen von reiner Flusssäure oder reinem Fluorwasserstoff aus technischem Fluorwasserstoff. Bei der Produktion von Fluorwasserstoff durch Umsetzung von Flussspat mit Schwefelsäure wird technischer Fluorwasserstoff kondensiert, der als Nebenbestandteile SO₂, H₂SO₄, H₂O, SiF₄, PF₃, POF₃, PF₅, BF₃, AsF₃ und andere Metallfluoride enthält. Durch Destillation können sowohl die Leichtsieder SiF₄, PF₃, POF₃, PF₅, BF₃ und SO₂, als auch die Schwersieder H₂SO₄, H₂O und andere Metallfluoride weitestgehend aus dem Fluorwasserstoff entfernt werden. Problematisch ist vor allem die Entfernung des Schwersieders AsF₃, das destillativ kaum unter 1 ppm (berechnet als As) abgesenkt werden kann. Die As-Abtrennung kann dadurch erleichtert werden, dass das dreiwertige As vor der Schwersiederdestillation, z. B. mittels KMnO₄, elektrolytisch oder mittels Fluor zu fünfwertigem As oxidiert wird (vgl. AU 266 930, US 5 108 559, US 4 668 497). Der so erzeugte Fluorwasserstoff ist sehr rein, entspricht aber noch nicht in allen Parametern den hohen Reinheitsanforderungen der Elektronikindustrie oder der Analytik. Problematisch sind vor allem Restgehalte von SiF₄ und von SO₂, das beim Mischen des HF mit Wasser zu H₂SO₄ oxidiert werden kann. Wird die Schwersiederabtrennung anstatt in sehr teuren, mit Fluorkunststoffen ausgekleideten Apparaten in preiswerten Apparaten aus Stahl durchgeführt, ist außerdem mit erhöhten Schwermetallfluoridkonzentrationen zu rechnen. Desgleichen erfordert die Lagerung des hochreinen Fluorwasserstoffs vor dem Mischen mit Wasser teure ausgekleidete Tanks.

Alternativ kann der Fluorwasserstoff nach der Leichtsiederabtrennung mit Wasser gemischt und das dreiwertige As in der wässrigen Flusssäure z. B. mittels KMnO₄ zum fünfwertigen As oxidiert werden (vgl. GB 1 192 474; CS 240 051). Die destillative Reinigung dieser wässrigen Flusssäure erfordert ebenfalls die Auskleidung der Apparate mit teuren Fluorkunststoffen. Ein Problem stellen dabei aber die hohen Arbeitstemperaturen im Bereich von 90 bis 110°C dar, weil mit steigender Temperatur die Diffussionsrate des HF durch die Auskleidungswerkstoffe stark zunimmt, wodurch Schäden an den Apparaten verursacht werden. Problematisch ist außerdem die Entsorgung der metallfluoridhaltigen Destillationsrückstände, die im wesentlichen aus 40%-iger HF bestehen und einen verhältnismäßig großen Anteil der eingesetzten Flusssäure darstellen.

Ziel des erfindungsgemäßen Verfahrens ist die zuverlässige und wirtschaftliche Herstellung reiner Flusssäure oder reinen Fluorwasserstoffs unter Vermeidung der Nachteile der bekannten Verfahren.

Die vorliegende Erfindung betrifft also ein Verfahren zur Herstellung reiner Flusssäure oder reinen Fluorwasserstoffs aus technischem Fluorwasserstoff mit einem Gehalt von mindestens 97 Gew.-% HF, durch
a) destillative Abtrennung leichtsiedender Verunreinigungen,
b) anschließende Oxidation von dreiwertigen Arsenverbindungen zu fünfwertigen Arsenverbindungen und gegebenenfalls
c) destillative Abtrennung der schwersiedenden Verunreinigungen,
dadurch gekennzeichnet, dass entweder der nach Schritt b) oder Schritt c) erhaltene Fluorwasserstoff einer zweistufigen Wäsche, in der ersten Stufe mit 65 bis 90 gew.-%iger Flusssäure und in der zweiten mit 90 bis 100 gew.-%iger Flusssäure bzw. Fluorwasserstoff, unter gleichzeitiger Abkühlung auf 10° bis 30°C, unterzogen wird, wobei durch Einspeisen einer kleinen Menge Wasser in den ersten oder zweiten Waschkreislauf und Ausspeisen einer entsprechenden Menge 65 bis 90 gew.-%iger Flusssäure noch vorhandene Verunreinigungen entfernt werden.

Die destillative Abtrennung leichtsiedender Verunreinigungen in Stufe a) erfolgt auf bekannte Weise in Apparaten aus Stahl, wobei die Leichtsieder SiF₄, PF₃, POF₃, PF₅, BF₃ und weitgehend SO₂ abgetrennt werden. Schritt a) wird vorzugsweise bei Normaldruck und einer Temperatur von 20 bis 23°C durchgeführt.

In Stufe b) wird dreiwertiges As, das als AsF₃ vorliegt, elektrolytisch oder durch Einleiten von F₂ in den flüssigen Fluorwasserstoff vollständig zu fünfwertigem As in Form von AsF₅ oxidiert. In Schrift b) werden vorzugsweise Stahlapparaturen eingesetzt, die Temperatur beträgt im allgemeinen von 10 bis 20°C, und der Druck etwa Umgebungsdruck.

In Schritt c) kann ebenfalls in herkömmlichen Apparaten aus Stahl bei Temperaturen von 20 bis 23°C über Kopf destilliert werden, wobei schwersiedende Verunreinigungen wie aus AsF₅ und HF gebildete HAsF₆, H₂SO₄, H₂O und Metallfluoride im Sumpf verbleiben.

Die sich nach Schritt b) oder c) anschließende zweistufige Wäsche wird erfindungsgemäß in einer Stahlapparatur, die mit Fluorpolymeren (z.B. Perfluoralkoxy) ausgekleidet ist, bei einem Druck von 0,5 bis 1,1 bar (abs.) durchgeführt. Der Fluorwasserstoff wird verdampft und zuerst wird mit im Kreislauf geförderter 65 bis 90 %-iger Flusssäure bei 20 bis 80°C, vorzugsweise mit 70 bis 85 %-iger Flusssäure bei 20 bis 60°C, und danach mit 90 bis 100 %-iger, vorzugsweise 95 bis 99,5 %iger Flusssäure resp. Fluorwasserstoff gewaschen, wobei gleichzeitig auf 10 bis 30°C abgekühlt wird. Durch Einspeisen einer kleinen Menge Wasser in die erste oder zweite Wäsche und Ausspeisen einer entsprechenden Menge 65 bis 90 %-iger Flusssäure werden die mit dem Fluorwasserstoff eingebrachten Verunreinigungen aus dem System ausgeschleust. Diese Wassermenge beträgt 1 bis 10, vorzugsweise 1 bis 5 % der in das System eingespeisten HF-Menge.

Nach Vorreinigung des Fluorwasserstoffs in den Schritten a), b) und c) enthält dieser insbesondere noch Verunreinigungen von SO₂ und Fe in Mengen von 2 bis 5 ppm bzw. 0,3 bis 2 ppm sowie HAsF₆ in einer Menge von 5 bis 30 ppb (als As).

Für den Fall, dass die zweistufige Wäsche sich direkt an Schritt b) anschließt, werden außer den genannten Verunreinigungen auch die schwersiedenden Verunreinigungen sowie HAsF₆ im ersten oder zweiten Waschkreislauf entfernt.

Das zweifach gewaschene Fluorwasserstoffgas wird durch einen Kondensator geleitet, in dem 25 bis 90 % des eingeleiteten Gases kondensiert und als Flüssiggas in die zweite Wäsche zurückgeleitet werden.

Das aus dem Kondensator austretende zweifach gewaschene reine Fluorwasserstoffgas kann entweder in einem weiteren Kondensator verflüssigt werden, um als wasserfreier reiner Fluorwassertoff verwendet zu werden oder in Flusssäure absorbiert werden, wobei durch Zugabe von hochreinem Wasser die Konzentration der Flusssäure im Bereich von 10 bis 85 % HF, vorzugsweise 40 bis 75 % HF eingestellt werden kann.

Das erfindungsgemäße Verfahren liefert sehr reinen Fluorwasserstoff bzw. Flusssäure. Die Analyse einer erfindungsgemäß hergestellten 50 %igen Flusssäure (übliche Handelsform) ergibt folgende Werte:

| | | |
|---|---|---|
| H₂SiF₆ | <30 ppm, vorzugsweise | <10 ppm |
| H₂SO₄+ H₂SO₃ | <1 ppm, vorzugsweise | <0,5 ppm |
| HNO₃ | <3 ppm, vorzugsweise | <1 ppm |
| H₃PO₄ | <100 ppm, vorzugsweise | <50 ppm |
| As | <10 ppb, vorzugsweise | <8 ppb |
| Fe | <50 ppb, vorzugsweise | <10 ppb |

Das erfindungsgemäße Verfahren soll anhand einer bevorzugten Ausführung gemäß Abbildung näher erläutert werden.

In den Verdampfer (1), der vorteilhaft als Sumpf des Wäschers I (2) ausgeführt ist, wird der gemäß Schritten a), b) und gegebenenfalls c) vorgereinigte, ggf. As⁵⁺-haltige Fluorwasserstoff (11) entweder direkt gasförmig oder als Flüssiggas eingeleitet. Gasförmiger Fluorwasserstoff und Wasserdampf (12) strömen in den Wäscher I (2), in dem sie mit 65 bis 90 %-iger, vorzugsweise 70 bis 85 %-iger Flusssäure (13) gewaschen werden. Die Flusssäure (13) wird mittels einer Pumpe aus dem Verdampfer (1) in den Wäscher I (2) gefördert und fließt (14) aus diesem in den Verdampfer (1) zurück. Um die Anreicherung von Nebenbestandteilen, die mit dem Fluorwasserstoff (11) eingebracht werden, zu vermeiden, wird eine geringe Wassermenge (15) in den Verdampfer (1) eingespeist und eine entsprechende Menge 65 bis 90 %-iger Flusssäure (16) ausgespeist, in der diese Nebenbestandteile enthalten sind. Alternativ kann das Wasser (15) in den Wäscher II (3) eingespeist werden.

Aus dem Wäscher I (2) strömt das mit 65 bis 90 %-iger Flusssäure (13) gewaschene Fluorwasserstoff/ Wasserdampfgemisch (17) in den Wäscher II (3), in dem es mit 90 bis 100 %-iger Flusssäure resp. Fluorwasserstoff (18) gewaschen wird. Das Waschmedium (18) wird dadurch erzeugt, dass im Kondensator (4) 25 bis 90 % des zum zweiten mal gewaschenen wasserdampfhaltigen HF-Gasstromes (19) kondensiert werden. Ggf im Wäscher II (3) nicht verdampfte Flusssäure (20) fließt über den Wäscher I (2) in den Verdampfer (1), in dem vorzugsweise der HF-Anteil verdampft wird.

Der nach zweifacher Wäsche und Teilkondensation hochreine aus dem Kondensator (4) austretende Fluorwasserstoffstrom (21) wird in einen Absorber (5) geleitet, in dem der HF in wässriger 10 bis 85 %-iger, vorzugsweise 40 bis 75 %-iger Flusssäure (22) absorbiert wird. Die aus dem Absorber (5) in eine Vorlage (7) abfließende erwärmte Flusssäure (23) wird über einen Kühler (8) im Kreislauf gefördert (28). Nicht absorbierter HF (24) wird aus dem Absorber (5) in einen Wäscher (6) geleitet, der mit dem zur Aufrechterhaltung der gewünschten Flusssäurekonzentration in der Vorlage (7) erforderlichen hochreinen Wasser (25) beaufschlagt wird. Aus dem Wäscher (6) wird ein minimaler Abgasstrom (26) einem alkalischen HF-Absorber zugeleitet. Die aus dem Wäscher (6) abfließende stark verdünnte Flusssäure (27) wird in die Vorlage (7) geleitet, aus der die produzierte reine Flusssäure (29) abgezogen wird.

Das erfindungsgemäße Verfahren bietet gegenüber dem Stand der Technik mehrere Vorteile:
- Die Leichtsiederdestillation und die As-Oxidation sowie ggf die Schwersiederdestillation des Fluorwasserstoffs werden in herkömmlichen Apparaten aus Stahl bei ca. 20°C durchgeführt.
- Die zweifache Wäsche des vorbehandelten Fluorwasserstoffs mit 65 bis 90 %-iger und 90 bis 100 %-iger Flusssäure erfolgt bei Temperaturen im Bereich von 10 bis 80°C, vorzugsweise 10 bis 60°C, bei denen die Diffusionsrate von HF durch die Auskleidungswerkstoffe vergleichsweise gering ist.
- Der Anteil des als verunreinigte Flusssäure aus der Wäsche I ausgeschleusten Fluorwasserstoffs am Gesamtdurchsatz ist gering. Er liegt im Bereich 5 bis 20 %, wenn keine Schwersiederdestillation erfolgt und im Bereich 2 bis 10 %, wenn der Fluorwasserstoff zusätzlich durch Schwersiederdestillation vorgereinigt wurde.
- Nach der zweimaligen Wäsche fällt hochreines HF-Gas an, aus dem in der Absorptionsanlage Flusssäure beliebiger Konzentration hergestellt oder wasserfreier Fluorwasserstoff kondensiert werden kann.

Die Vorteile der Erfindung sollen anhand der Beispiele verdeutlicht werden, ohne dass dadurch der Umfang der Erfindung eingeschränkt wird.

### Beispiel 1:

Technischer Fluorwasserstoff wird in einer Leichtsiederkolonne aus Stahl bei Umgebungsdruck destilliert. Der aus dem Kolonnensumpf abgezogene Fluorwasserstoff enthält:
- 30: ppm H₂SO₄,
- 3: ppm SO₂,
- 85: ppm H₂O,
- 18: ppm As,
- 12: ppm Si,
- 0,2: ppm P.

Durch Einleiten von 7 l F₂ pro t Fluorwasserstoff wird das AsF₃ zu AsF₅ oxidiert, das mit HF zu HAsF₆ reagiert. Anschließend wird bei Umgebungsdruck in einer Kolonne (ebenfalls aus Stahl) zwecks Abtrennung der Schwersieder destilliert. Als Kopfprodukt wird vorgereinigter Fluorwasserstoff folgender Zusammensetzung erhalten:
- 1: ppm H₂SO₄,
- 3: ppm SO₂,
- 25: ppm H₂O,
- 16: ppb As,
- 12: ppm Si,
- <0,1: ppm P,
- 0,4: ppm Fe.

Der mit einer Leistung von 3,3 t/h produzierte vorgereinigte Fluorwasserstoff wird in einem Stahltank gelagert, aus dem die Anlage zur Herstellung hochreiner Flusssäure beschickt wird, die bei Umgebungsdruck betrieben wird.

In den Verdampfer (1) werden 515 kg/h des vorgereinigten Fluorwasserstoffs (11) und 2,5 l/h hochreines Wasser (15) eingespeist. In dem mit ca. 225 kg/h 5bar-Dampf beheizten Verdampfer (1) stellt sich bei Umgebungsdruck eine Temperatur von 42°C ein. Aus dem Verdampfer werden 17,5 kg/h ca. 85 %-iger Flusssäure abgezogen (16), in denen die ausgewaschenen Verunreinigungen H₂SO₄, H₂SiF₆, FeF₂ usw. enthalten sind. Aus dem Verdampfer (1) strömen in den auf diesen aufgesetzten, mit Füllkörpern beschickten Wäscher I (2) 500 kg/h HF-Dampf (12), der mit 2 m³/h 85 %-iger Flusssäure (13) gewaschen wird, die mittels einer Pumpe in den Kopfteil des Wäschers I gefördert wird.

Auf den Wäscher I (2) ist der Wäscher II (3) aufgesetzt, durch den die 500 kg/h HF-Dampf (17/19) in den Kondensator (4) strömen. Mittels Kaltwasserkühlung werden hier 950 kg/h HF (mit ca. 0,5 % H₂O-Gehalt) kondensiert, die als Waschmedium (18) über der Füllkörperbeschickung des Wäschers II verteilt werden. Aus dem Wischer II fließt eine geringe Menge (20) Flusssäure in den Wäscher I.

Das im Kondensator (4) nicht kondensierte hochreine Fluorwasserstoffgas (21) wird in den Absorber (5) geleitet, in dem es in 6 t/h 60 %-iger Flusssäure absorbiert wird, die mit 25°C in den Absorber eingespeist werden (22).

Aus dem Absorber fließen 6,5 t/h 63 %-iger Flusssäure (23) mit 42°C in die Vorlage (7). Der dem Absorber (5) nachgeschaltete Wäscher (6) wird mit 333 l/h hochreinem Wasser (25) beschickt, das HF-haltig ebenfalls in die Vorlage (7) abfließt (27). Dadurch erwärmt sich die Flusssäure auf ca. 48°C. Aus der Vorlage (7) wird die 60 %-ige Flusssäure (28) durch den Kühler (8) gefördert, in dem sie auf 25°C abgekühlt wird. 6 t/h der gekühlten Säure werden in den Absorber (5) eingespeist (22) und 833 kg/h als produzierte hochreine Flusssäure (29) in den Lagertank abgegeben.

Die produzierte Flusssäure hat typischerweise folgende Analyse:
<10 ppm H₂SiF₆
<0,5 ppm (H₂SO₄ + H₂SO₃)
<1 ppm HNO₃
30-50 ppb H₃PO₄
6-8 ppb As
1-10 ppb Fe

### Beispiel 2:

Technischer Fluorwasserstoff wird analog Beispiel 1 in einer Leichtsiederkolonne destilliert und AsF₃ durch Einleiten von F₂ zu AsF₅ oxidiert. 540 kg/h des so vorbehandelten Fluorwasserstoffs (11) werden in den Verdampfer (1) eingespeist. Gleichzeitig werden 13 l/h Wasser (15) eingespeist und 53 kg/h ca. 75 %-ige Flusssäure (16) abgezogen, die 350 ppm H₂SO₄, 435 ppm H₂SiF₆, 192 ppm As⁵⁺ und 12 ppm Fe²⁺ enthalten. Aus dem bei Umgebungsdruck betriebenen Verdampfer strömt der Dampf (12) mit 63°C durch den Wäscher I (2), in dem er mit 2 m³/h 75 %-iger Flusssäure (13) gewaschen wird, die aus dem Wäscher I in den Verdampfer zurückfließt (14).

Der gewaschene HP-Dampf strömt (17) in den Wäscher II (3), in dem er mittels 1500 kg/h HF (der etwa 1 % Wasser enthält) (18) gewaschen und von 63 auf 22°C gekühlt wird.

Aus dem Wäscher II strömen 2000 kg/h HF-Gas (19) in den Kondensator (4), in dem die Teilkondensation von 1500 kg/h HF erfolgt, die in den Wäscher II (3) fließen (18). Das aus dem Kondensator austretenden hochreine HF-Gas (21) wird analog Beispiel 1 zu 60 %-iger Flusssäure aufgearbeitet.

Die Flusssäure hat folgende Analysenwerte:
<10 ppm H₂SiF₆
<0,5 ppm (H₂SO₄ + H₂SO₃)
<1 ppm HNO₃
30-50 ppb H₃PO₄
6-10 ppb As
1-10 ppb Fe

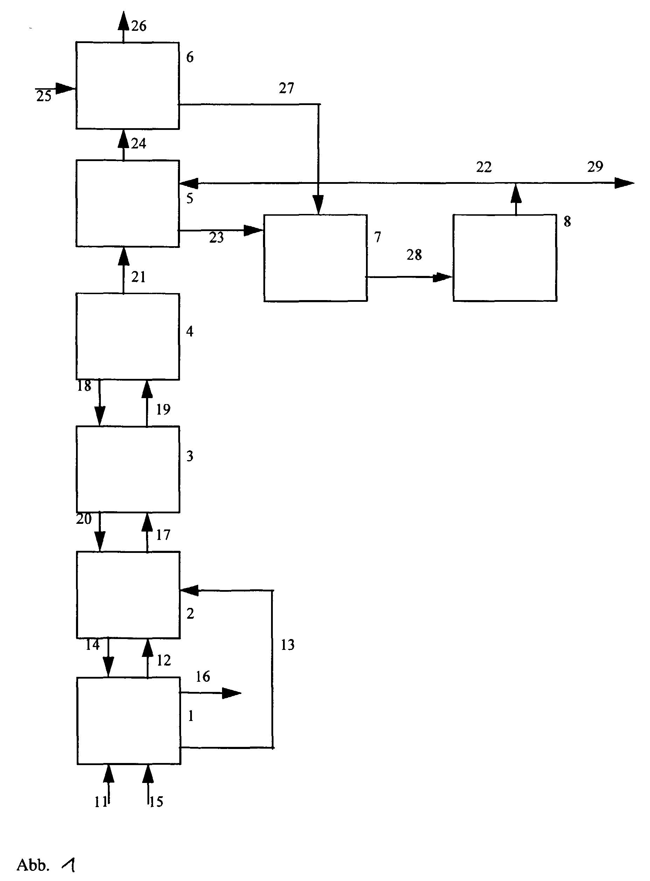

## Patentansprüche

1. Verfahren zur Herstellung reiner Flusssäure oder reinen Fluorwasserstoffs aus technischem Fluorwasserstoff mit einem Gehalt von mindestens 97 Gew.-% HF, durch
a) destillative Abtrennung leichtsiedender Verunreinigungen,
b) anschließende Oxidation von dreiwertigen Arsenverbindungen zu fünfwertigen Arsenverbindungen und gegebenenfalls
c) destillative Abtrennung der schwersiedenden Verunreinigungen,
dadurch gekennzeichnet, dass entweder der nach Schritt b) oder der nach Schritt c) erhaltene Fluorwasserstoff einer zweistufigen Wäsche, in der ersten Stufe mit 65 bis 90 gew.-%iger Flusssäure und in der zweiten mit 90 bis 100 gew.-%iger Flusssäure bzw. Fluorwasserstoff, unter gleichzeitiger Abkühlung auf 10° bis 30°C, unterzogen wird, wobei durch Einspeisen einer kleinen Menge Wasser in den ersten oder zweiten Waschkreislauf und Ausspeisen einer entsprechenden Menge 65 bis 90 gew.-%iger Flusssäure noch vorhandene Verunreinigungen entfernt werden.

2. Verfahren gemäß Anspruch 1, dadurch gekennzeichnet, dass die erste Wäsche des Fluorwasserstoffgases mit 70 bis 85 gew.-%iger Flusssäure erfolgt.

3. Verfahren gemäß Ansprüchen 1 und 2, dadurch gekennzeichnet, dass die zweite Wäsche des Fluorwasserstoffgases mit 95 bis 99,5 gew.-%iger Flusssäure erfolgt.

4. Verfahren gemäß Ansprüchen 1 bis 3, dadurch gekennzeichnet, dass 25 bis 90 % des zweimal gewaschenen Fluorwasserstoffs kondensiert und als Waschmedium in der zweiten Wäsche verwendet werden.

5. Verfahren gemäß Ansprüchen 1 bis 4, dadurch gekennzeichnet, dass die Absorption des zweimal gewaschenen, nicht kondensierten Fluorwasserstoffs in 40 bis 75 gew.-%iger Flusssäure erfolgt.

6. Verfahren gemäß Ansprüchen 1 bis 5, dadurch gekennzeichnet, dass die zweistufige Wäsche bei einem Druck von 0,5 bis 1,1 bar durchgeführt wird.

7. Verfahren gemäß Ansprüchen 1 bis 6, dadurch gekennzeichnet, dass die zweistufige Wäsche des HF in einer Stahlapparatur durchgeführt wird, die mit Fluor-haltigen Polymeren ausgekleidet ist.
